# EUROPÄISCHE PATENTSCHRIFT

(11) **EP 0 533 075 B1**
(45) Veröffentlichungstag und Bekanntmachung des Hinweises auf die Patenterteilung: **23.08.1995**
(21) Anmeldenummer: 92115623.8
(22) Anmeldetag: 12.09.1992
(51) Int. Cl.: C02F 1/40, B01D 17/025, E03F 5/16

(54) **Flüssigkeitsabscheider**
Liquid separator
Séparateur de liquides

(30) Priorität: 17.09.1991 DE 4130812
(43) Veröffentlichungstag der Anmeldung: 24.03.1993
(73) Patentinhaber: Benkeser, Michael, Dipl.-Ing. (FH), D-77886 Lauf (DE)
(72) Erfinder: Benkeser, Michael, Dipl.-Ing. (FH), D-77886 Lauf (DE)
(74) Vertreter: Lasch, Hartmut Dipl.-Ing.

(56) Entgegenhaltungen:
- EP-A- 0 201 072
- EP-A- 0 387 780
- AT-A- 74 890
- DD-A- 275 856

## Beschreibung

Die Erfindung betrifft einen Flüssigkeitsabscheider, insbesondere zum Trennen von Gemischen aus Wasser und spezifisch leichteren Flüssigkeiten wie Öl, Benzin, Fett od. dgl., mit einer Schlammfangvorrichtung, einem Benzinabscheider und einem Koaleszenzabscheider, die von einem zu reinigenden Flüssigkeitsgemisch nacheinander durchströmt sind, wobei der Koaleszenzabscheider innerhalb eines Behälters angeordnet ist, der in einen Behälter der Schlammfangvorrichtung eingesetzt ist.

Um den heutigen Abwasservorschriften Genüge leisten zu können, werden in verstärktem Maße Flüssigkeitsabscheider zum Trennen von Öl- bzw. Benzin-Wassergemischen benötigt. Bei Leichtflüssigkeitsabscheidern handelt es sich üblicherweise um Schwerkraftabscheider, bei denen die spezifisch leichteren Flüssigkeiten an die Oberfläche der im Flüssigkeitsabscheider befindlichen Flüssigkeit aufsteigen und sich dort ansammeln. Bei Koaleszenzabscheidern werden neben dem Schwerkraftprinzip Koaleszenzfilter eingesetzt, um auch feinste dispergierte Öltröpfchen durch oberflächenaktives Material zurückzuhalten und zu größeren Öltröpfchen umzubilden, die dann wiederum nach dem Schwerkraftprinzip aufsteigen. Das europäische Patent EP-A- 0 387 780 beschreibt einen Koaleszenzabscheides, insbesondere zum Trennen von Gemischen aus Wasser und spezifisch leichteren Flüssigkeiten, wie Oel, Benzin od. dgl., der aus einem Behälter mit einem oben liegenden Einlauf mit Einlaufschikane und einem etwa auf gleicher Höhe sowie gegenüber dem Einlauf liegenden Auslauf, einem an den Einlaufteil anschließen den Abscheiderteil mit einem bodennahen, in Abhängigkeit vom Flüssigkeitsniveau steuerbaren Ablauf und einem von diesem nach oben zum Auslauf reichenden Ablaufschacht besteht. Das Abscheiderteil besteht aus einer an die Einlaufschikane anschließenden Kammer, die von der Wand des Behälters und einer das Behälterzentrum etwa konzentrisch umgebenden und zur Auslaufseite reichenden C-förmigen Trennwand gebildet ist, und dem von dieser Trennwand gebildeten Innenraum im Behälterzentrum, der den Ablauf in den Ablaufschacht aufweist.

Häufig werden für die Abscheidung von Mineralölen und Leichtflüssigkeiten sowie für organische Öle und Fette Flüssigkeitsabscheider verwendet, die aus verschiedenen Reinigungsbehältern bestehen. Ein derartiger Flüssigkeitsabscheider weist üblicherweise eine Schlammfangvorrichtung, einen Benzinabscheider und einen Koaleszenzabscheider auf, die nacheinander von der zu reinigenden Flüssigkeit durchströmt werden. Um die ordnungsgemäße Funktion eines Flüssigkeitsabscheiders überwachen und Aufschluß über den Reinigunggrad der zu reinigenden Flüssigkeit gewinnen zu können, ist dem letzten Reinigungsbehälter des Flüssigkeitsabscheiders üblicherweise eine Probenentnahmevorrichtung nachgeschaltet, über die eine Probe der aus dem Flüssigkeitsabscheider austretenden, gereinigten Flüssigkeit entnommen werden kann.

Die Ausbildung und Anordnung eines derartigen Flüssigkeitsabscheiders ist aufgrund der vier voneinander unabhängigen Funktionsteile bzw. Aggregate konstruktiv und montagetechnisch sehr aufwendig und somit kostenintensiv. Darüber hinaus haben die nebeneinander angeordneten Aggregate einen relativ großen Platzbedarf. Der Einbau des Flüssigkeitsabscheiders erfordert somit eine entsprechende Grundstücksgroße und eine ausreichend große Baugrube. Diese Voraussetzungen sind nicht immer gegeben, so daß die Einsatzmöglichkeiten derartiger Flüssigkeitsabscheider wesentlich beschränkt sind. Darüber hinaus ist es bei vier hintereinander geschalteten Aggregaten notwendig, zwischen den einzelnen Aggregaten eine Vielzahl von abzudichtenden Anschlußverbindungen vorzusehen, die die Herstellungs- und Installationskosten des Flüssigkeitsabscheiders wesentlich erhöhen. Es sind des weiteren Maßnahmen zu treffen, um das Austreten von verunreinigter Flüssigkeit in das Erdreich zuverlässig zu vermeiden.

Es sind aus diesem Grunde sogenannte integrierte Anlagen geschaffen worden, bei denen die einzelnen Reinigungsbehälter bzw. Aggregate nicht als jeweils separates Bauteil ausgebildet und hintereinander angeordnet, sondern zumindest der Koaleszenzabscheider innerhalb des Behälters der Schlammfangvorrichtung vorgesehen ist. Auf diese Weise ist der Koaleszenzabscheider und gegebenenfalls auch die Probenentnahmevorrichtung vollständig in den Behälter der Schlammfangvorrichtung integriert, ohne daß sie einen zusätzlichen Bauraum erfordern. Aufgrund der Anordnung der einzelnen Bearbeitungsstationen in einem gemeinsamen Behälter kann der Flüssigkeitsabscheider werksseitig vollständig vormontiert werden, wodurch eine schnelle und kostengünstige Fertigung möglich ist.

Bei einem derartigen integrierten Flüssigkeitsabscheider tritt jedoch das Problem auf, daß die in den Behälter der Schlammfangvorrichtung eingesetzten Aggregate einer wesentlichen Baugrößenbeschränkung durch den Behälter der Schlammfangvorrichtung unterworfen sind, wobei sie die Funktion der Schlammfangvorrichtung nicht beeinträchtigen dürfen. Bei einem Benzinabscheider ist es zur Erzielung eines hohen Abscheidegrades jedoch notwendig, daß die leichten Flüssigkeitströpfchen ausreichend Zeit haben, um in beruhigter Strömung aufsteigen und sich durch Anlagerung vergrößern zu können. Dazu sind jedoch lange Strömung- und Austauschwege notwendig, die in einem integrierten Flüssigkeitsabscheider nicht zur Verfügung stehen. Somit ist bei den genannten integrierten Anlagen der nach dem Schwerkraftprinzip abgeschiedene Anteil relativ gering mit der Folge, daß die Reinigung der Flüssigkeit im wesentlichen allein mittels des Koaleszenzfilters erreicht werden muß.

Der Erfindung liegt die Aufgabe zugrunde, einen gattungsgemäßen Flüssigkeitsabscheider derart weiterzubilden, daß trotz eines kompakten Aufbaus ein hoher Abscheidegrad erreicht werden kann.

Diese Aufgabe wird erfindungsgemäß durch einen Flüssigkeitsabscheider gelöst, der im Anspruch 1 beschrieben wird, bei dem der Benzinabscheider von einer Ringkammer gebildet ist, die den Behälter des Koaleszenzabscheiders umgibt. Erfindungsgemäß ist somit ein integrierter Flüssigkeitsabscheider kompakter Bauart geschaffen, bei dem innerhalb des Behälters der Schlammfangvorrichtung lediglich der separate Behälter des Koaleszenzabscheiders angeordnet ist. Durch die Ausbildung des Benzinabscheiders als eine den Behälter des Koaleszenzabscheiders umgebende Ringkammer kann auf die Anordnung eines eigenen Behälters für den Benzinabscheider verzichtet werden. Die Ringkammer hat einen nur geringen Platzbedarf, so daß trotz Erzielung eines hohen Abscheide-Wirkungsgrades die Gesamtabmessungen des Behälters der Schlammfangvorrichtung und somit des gesamten Flüssigkeitsabscheiders gering gehalten werden können.

Beim Durchströmen der Ringkammer ergeben sich für das zu reinigende Flüssigkeitsgemisch relativ lange Strömungs- und Austauschwege, so daß ein großer Teil der abzuscheidenden Flüssigkeit nach dem Schwerkraftprinzip getrennt werden kann. Die leichten Flüssigkeitströpfchen können in beruhigter Strömung aufsteigen und sich durch Anlagerung vergrößern. Auf diese Weise kann erreicht werden, daß das in das Koaleszenzfiltermaterial eintretende Flüssigkeitsgemisch bereits weitgehend gereinigt ist, so daß die Standzeit des Koaleszenzfilters erhöht ist.

Bevorzugterweise sind erfindungsgemäß der Einlauf und der Auslauf der Ringkammer benachbart angeordnet. Somit erstreckt sich der Strömungsweg vom Einlauf im wesentlichen vollständig um den Behälter des Koalenszenzabscheiders herum zum Auslauf, wodurch ein möglichst langer Stömungsweg für das zu reinigende Flüssigkeitsgemisch innerhalb der Ringkammer und somit ein hoher Abscheidegrad erzielt wird.

Vorzugsweise ist die Ringkammer zwischen der Außenwand des Behälters des Koaleszenzabscheiders und einer äußeren Kammerwand gebildet, die den Behälter des Koaleszenzabscheiders umgibt. Auf diese Weise ist ein konstruktiv einfacher Aufbau der Ringkammer erreicht, da die Außenwand des Behälters des Koaleszenzabscheiders die innere Kammerwand bildet. Dabei kann die Bodenwand des Behälters des Koaleszenzabscheiders über seine Außenwand hinaus vergrößert sein, so daß sie gleichzeitig als Bodenwand für die Ringkammer verwendet werden kann. Es ist jedoch auch möglich, die Ringkammer zu bilden, indem der Behälter des Koaleszenzabscheiders in einen weiteren Behälter eingesetzt wird. Die Schlammfangvorrichtung, der Benzinabscheider und der Koaleszenzabscheider werden von der zu reinigenden Flüssigkeit nacheinander durchströmt. Um eine derartige strömungstechnische Hintereinanderschaltung der Aggregate in konstruktiv einfacher Weise erreichen zu können, ist erfindungsgemäß vorgesehen, daß in der Kammerwand ein Einlauf der Ringkammer und in der Außenwand des Behälters des Koaleszenzabscheiders ein Auslauf der Ringkammer ausgebildet ist. Somit strömt das zu reinigende Flüssigkeitsgemisch nach Durchströmen der Schlammfangvorrichtung von außen in die Ringkammer ein, durchströmt diese vollständig und gelangt über den Auslauf in den innerhalb der Ringkammer angeordneten Koaleszenzabscheider.

Um zuverlässig vermeiden zu können, daß dabei ein Teil des zu reinigenden Flüssigkeitsgemisches vom Einlauf unerwünschterweise direkt in den Auslauf strömt, ist vorzugsweise in der Ringkammer eine Trennwand angeordnet, die einen Einlaufbereich von einem Auslaufbereich trennt. Ein konstruktiv einfacher Aufbau für die Trennwand wird erreicht, wenn diese im wesentlichen senkrecht zur Strömungsrichtung verläuft. Die Ringkammer erstreckt sich dabei vorzugsweise zwischen dem Einlauf und dem Auslauf über einen Umfangsbereich von etwa 350°.

In vorteilhafter Weiterbildung der Erfindung ist vorgesehen, daß in der Ringkammer eine den Einlaufbereich begrenzende, sich im wesentlichen senkrecht zur Strömungsrichtung erstreckende erste Leitwand angeordnet ist, die eine bodennahe Durchtrittsöffnung aufweist und lediglich eine bodennahe Strömung zuläßt. Durch die erste Leitwand in Zusammenwirken mit der Trennwand wird ein Einlaufschacht gebildet, in dem das einlaufende Flüssigkeitsgemisch nach unten geleitet wird. Aus dem Einlaufschacht kann das Flüssigkeitsgemisch lediglich über die bodennahe Durchtrittsöffnung in der Ringkammer weiterströmen. Auf diese Weise wird nicht nur eine Beruhigung der Strömung erreicht, des weiteren wird auch die Höhe der Ringkammer wirkungsvoll als Strömungsweg genutzt, was einen hohen Abscheidegrad zur Folge hat.

Bevorzugterweise ist erfindungsgemäß vorgesehen, daß in der Ringkammer stromab des Einlaufbereiches eine im wesentlichen senkrecht zur Strömungsrichtung verlaufende zweite Leitwand angeordnet ist, die sich vom Boden der Ringkammer bis etwa zu deren halber Höhe erstreckt. Nachdem das Flüssigkeitsgemisch durch die bodennahe Durchtrittsöffnung der ersten Leitwand hindurchgeströmt ist, trifft es auf die zweite Leitwand und wird von dieser nach oben umgelenkt. Dabei wird den mitgeführten Leichtflüssigkeitströpfen eine Aufwärtsbewegungskomponente erteilt, die deren Aufsteigen bzw. Aufschwimmen erleichtert. Beim Überströmen der zweiten Leitwand tritt wiederum eine Strömungsumlenkung auf, die sich vorteilhaft auf die Trennung zwischen dem Wasser und den abzuscheidenden Flüssigkeitströpfchen auswirkt. Auch die zweite Leitwand bringt den Vorteil mit sich, daß die Höhe der Ringkammer als Strömungsweg genutzt wird, wodurch eine gute Abscheidung erzielt werden kann.

Gemäß einer bevorzugten Ausführungsform ist vorgesehen, daß nahe dem Auslauf der Ringkammer eine den Auslaufbereich begrenzende, sich im wesentlichen senkrecht zur Strömungsrichtung erstreckende dritte Leitwand angeordnet ist, die eine bodennahe Durchtrittsöffnung aufweist und lediglich eine bodennahe Strömung zuläßt. Somit ist in Zusammenwirken der dritten Leitwand mit der zwischen dem Einlauf- und dem Auslaufbereich angeordneten Trennwand ein Auslaufschacht gebildet, in den die Flüssigkeit nur über die bodennahe Durchtrittsöffnung der dritten Leitwand eintreten kann. Da die Flüssigkeit beim Auftreffen auf die dritte Leitwand bereits die gesamte Ringkammer durchströmt hat, befinden sich in der bodennahen Flüssigkeitsströmung kaum noch abzuscheidende Leichtflüssigkeitströpfchen. In den Auslaufschacht strömt somit bereits im wesentlichen gereinigtes Wasser ein. Leichtflüssigkeitströpfchen, die nach dem Durchströmen der Ringkammer noch nicht vollständig an die Oberfläche aufgestiegen sind, treffen auf die dritte Leitwand auf und werden von dieser zur Oberfläche abgelenkt.

Vorzugsweise ist vorgesehen, daß der Behälter des Koaleszenzabscheiders einen im wesentlichen kreisförmigen Querschnitt aufweist, so daß die Ringkammer die Form eines Kreisringes aufweisen kann. In bevorzugter Weiterbildung der Erfindung ist dabei vorgesehen, daß die Kammerwand im wesentlichen konzentrisch zu dem Behälter des Koaleszenzabscheiders verläuft. Auf diese Weise kann die Ringkammer einen über ihre gesamte Länge im wesentlichen konstanten Strömungsquerschnitt aufweisen, wodurch die Ausbildung einer laminaren Strömung begünstigt ist.

Um die ordnungsgmäße Funktion eines Flüssigkeitsabscheiders überwachen und Aufschluß über den Reinigungsgrad der zu reinigenden Flüssigkeit gewinnen zu können, ist der letzten Reinigungsstufe des Flüssigkeitsabscheiders üblicherweise eine Probenentnahmevorrichtung nachgeschaltet, über die eine Probe der aus dem Flüssigkeitsabscheider austretenden, gereinigten Flüssigkeit entnommen werden kann. Vorzugsweise weist die Probenentnahmevorrichtung einen im Bereich des Auslaufes des Koaleszenzabscheiders abzweigenden Probenentnahmestutzen auf. Dadurch ist in konstruktiv einfacher Weise eine Probenentnahme gewährleistet, ohne den Bauraum des Flüssigkeitsabscheiders zu vergrößern.

Nachstehend ist die Erfindung anhand eines in der Zeichnung wiedergegebenen Ausführungsbeispiels beschrieben. In der Zeichnung zeigen:
- Figur 1: einen Längsschnitt durch eine Ausführungsform eines Flüssigkeitsabscheiders gemäß der Erfindung;
- Figur 2: eine Draufsicht auf den Flüssigkeitsabscheider gemäß Figur 1;
- Figur 3: eine vergrößerte Darstellung der Ringkammer in Aufsicht und
- Figur 4: mehrere Teilansichten von Teilbereichen der Ringkammer gemäß Figur 3.

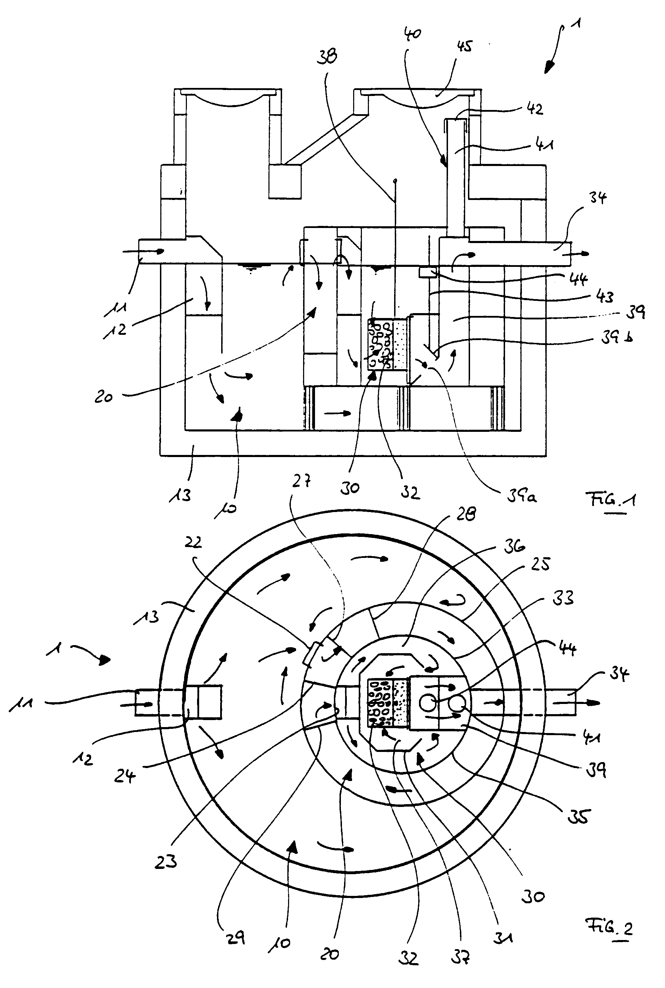

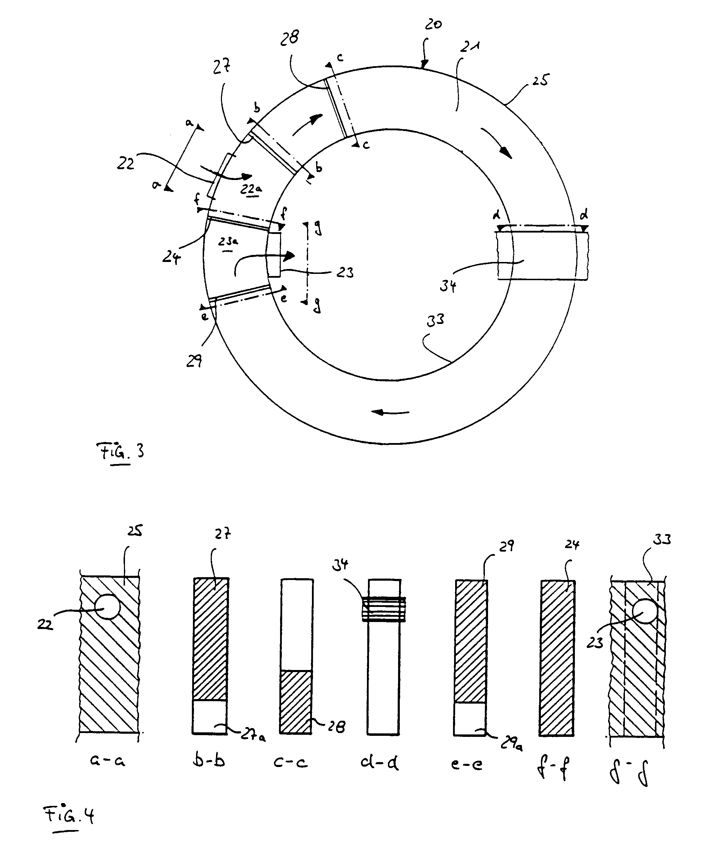

Der in den Figuren 1 und 2 dargestellte Flüssigkeitsabscheider 1 umfaßt eine Schlammfangvorrichtung 10, einen Benzinabscheider 20, einen Koaleszenzabscheider 30 sowie eine Probenentnahmevorrichtung 40, die von einer zu reinigenden Flüssigkeit bzw. einem Flüssigkeitsgemisch nacheinander durchströmt werden.

Ein Behälter 13 der Schlammfangvorrichtung 10, der beim gezeigten Ausführungsbeispiel einen kreisrunden Querschnitt besitzt und vorzugsweise aus Stahlbeton, Edelstahl, Gußeisen, Polyethylen, Polypropylen, glasfaserverstärktem Kunststoff oder Faserbeton besteht, weist einen Einlauf 11 auf, der im oberen Bereich des Behälters 13 angeordnet ist.

Am Einlauf 11 des Behälters 13 ist eine Einlaufschikane 12 angeordnet, die einen nach unten offenen, kurzen Schacht bildet und aus parallelen, senkrechten Wänden und einer oberhalb des Einlaufs ansetzenden, im wesentlichen horizontal verlaufenden Wandung besteht. Wie in Figur 1 angedeutet ist, wird das über den Einlauf 11 zuströmende Flüssigkeitsgemisch mittels der Einlaufschikane 12 nach unten in die Tiefe des Behälters 13 umgelenkt. Im Innenraum des Behälters 13 setzen sich dabei schwere Schwebstoffe des Flüssigkeitsgemisches am Boden ab.

Innerhalb des Behälters 13 der Schlammfangvorrichtung 10 ist der Koaleszenzabscheider 30 mit einem Behälter 35 angeordnet, dessen Außenwand 33 in Abstand von einer Kammerwand 25 umgeben ist, so daß zwischen der Außenwand 33 und der Kammerwand 25 eine umlaufende Ringkammer 21 gebildet ist, die den Benzinabscheider 20 bildet. Sowohl die Außenwand 33 als auch die Kammerwand 25 bestehen vorzugsweise aus Edelstahl, Polyethylen, Polypropylen, glasfaserverstärktem Kunststoff, Faserbeton oder verzinktem Stahl und weisen eine Kreisform auf.

In Figur 3 ist die Ringkammer 21 im Detail dargestellt. Da die Außenwand 33 des Koaleszenzabscheiders 30 und die umgebende äußere Kammerwand 25 im wesentlichen einen kreisförmigen Querschnitt aufweisen und konzentrisch angeordnet sind, besitzt die Ringkammer 21 einen im wesentlichen konstanten Strömungsquerschnitt. In der Kammerwand 25 ist eine einen Einlauf 22 bildende Öffnung ausgebildet, über die die Flüssigkeit vom Innenraum des Behälters 13 der Schlammfangvorrichtung 10 in die Ringkammer 21 eingeleitet werden kann. Diese Flüssigkeit wird nahe der Oberfläche der im Behälter 13 befindlichen Flüssigkeit entnommen, so daß sie von schweren Schwebstoffen weitestgehend befreit ist. Die in den Benzinabscheider 20 bzw. die Ringkammer 21 eintretende Flüssigkeit wird in einem Einlaufbereich 22a zum Boden der Ringkammer 21 umgelenkt. Der Einlaufbereich 22a ist von einer Trennwand 24, die den Strömungsquerschnitt der Ringkammer 21 vollständig sperrt und in Figur 4 f-f darstellt ist, und von einer ersten Leitwand 27 begrenzt, die sich im wesentlichen senkrecht zur Strömungsrichtung erstreckt und lediglich eine bodennahe Durchtrittsöffnung 27a aufweist, wie in Figur 4 b-b gezeigt ist.

In Strömungsrichtung hinter dem Einlaufbereich 22a bzw. der ersten Leitwand 27 ist in der Ringkammer 21 eine zweite Leitwand 28 angeordnet, die im wesentlichen senkrecht zur Strömungsrichtung verläuft und sich vom Boden der Ringkammer 21 bis etwa zur halben Höhe des Strömungsquerschnittes der Ringkammer 21 erstreckt. Die zweite Leitwand 28 ist in Figur 4 c-c dargestellt. Mittels der zweiten Leitwand 28 kann der durch die bodennahe Durchtrittsöffnung 27a der ersten Leitwand 27 hindurchtretenden Flüssigkeitsströmung eine aufwärts gerichtete Strömungskomponente verliehen werden, wodurch die leichten, abzuscheidenden Flüssigkeitströpfchen zum Aufsteigen bzw. Ausschwimmen gebracht werden.

Nahe dem Einlaufbereich 22a, jedoch von diesem durch die Trennwand 24 getrennt, ist ein Auslaufbereich 23a ausgebildet, der von der Trennwand 24 sowie einer dritten Leitwand begrenzt ist, die ebenfalls eine bodennahe Durchtrittsöffnung 29a aufweist und in Figur 4 e-e dargestellt ist. Die in den schachtartigen Auslaufbereich 23a durch die Durchtrittsöffnung 29a der dritten Leitwand 29 eintretende Flüssigkeit kann über einen nahe der Oberfläche der in dem Flüssigkeitsabscheider befindlichen Flüssigkeit angeordneten Auslauf 23, der von einer Öffnung in der Außenwand 33 des Koaleszenzabscheiders 30 gebildet ist, abströmen. Der Auslauf 23 des Benzinabscheiders 20 dient gleichzeitig als Einlauf für den Koaleszenzabscheider 30.

Bei der in Figur 3 gezeigten Ringkammer 21 strömt das über den Einlauf 22 zugeführte Flüssigkeitsgemisch durch die bodennahe Durchtrittsöffnung 27a der ersten Leitwand 27, überströmt die zweite Leitwand 28 unter mehrfacher Strömungsumlenkung und umströmt den Behälter des Koaleszenzabscheiders im wesentlichen vollständig, d.h. über einen Umfangsbereich von etwa 350°, bevor sie durch die bodennahe Durchtrittsöffnung 29a der dritten Leitwand 29 in den Auslaufbereich 23a einströmt und von diesem über den oberen Auslauf 23 in den, in Figur 3 nicht dargestellten Koaleszenzabscheider 30 gelangt.

Wie in den Figuren 1 und 2 dargestellt ist, ist in dem Behälter 35 des Koaleszenzabscheider 30 eine zum Behälterzentrum etwa konzentrisch verlaufende Führungswand 31 eingesetzt, die aus polygonal zusammengesetzten Platten gebildet ist. Sie begrenzt innenseitig einen äußeren Strömungskanal 36, der außenseitig durch die Außenwand 33 des Behälters 35 begrenzt ist. Die Führungswand 31 reicht über das Behälterzentrum hinaus zur Auslaufseite des Behälters 35 und bildet an ihrer Innenseite im Behälterzentrum einen Innenraum 37, in dem ein Koaleszenzfilter 32 angeordnet ist. Der Koaleszenzfilter 32 ist an einem Gestänge 38 angebracht, mittels dessen er eingesetzt und ausgebaut werden kann. Dem Koaleszenzfilter 32 ist ein Ablaufschacht 39 nachgeschaltet, der durch vertikale Wände von dem Innenraum 37 des Koaleszenzabscheiders 30 derart getrennt ist, daß nur durch den Koaleszenzfilter 32 hindurchgeströmte Flüssigkeit in den Ablaufschacht 39 eintreten kann.

Einem Zulauf 39a des Ablaufschachtes 39 ist eine schwenkbar gelagerte Verschlußklappe 39b zugeordnet, an der ein Gestänge 43 eines Schwimmers 44 angelenkt ist. Der Schwimmer 44 steuert die Verschlußklappe 39b entsprechend dem Flüssigkeitsstand im Flüssigkeitsabscheider 1, schließt sie also bei Absinken des Wasserspiegels unter ein bestimmtes Niveau infolge der Ansammlung von leichterem Öl, Benzin od. dgl.

Am oberen Ende des Ablaufschachtes 39 des Koaleszenzabscheiders 30 zweigt auf der Innenseite des Behälters 35 die Probenentnahmevorrichtung 40 in Form eines Probenentnahmestutzens 41 ab, der im wesentlichen vertikal nach oben verläuft, wobei er sich über die obere Kante des Behälters 15 der Schlammfangvorrichtung 10 hinaus erstreckt und über einen von der Erdoberfläche zugänglichen Wartungs- und Einstiegsschacht 45 zugänglich ist. An seinem oberen Ende weist der Probenentnahmestutzen 41 eine Abdeckung 42 auf, die lösbar angebracht ist.

Von dem Ablaufschacht 39 strömt die nunmehr gereinigte Flüssigkeit zu einem Auslauf 34, über den sie sowohl den Koaleszenzabscheider 30 als auch den Behälter 13 der Schlammfangvorrichtung und somit den Flüssigkeitsabscheider 1 verläßt.

## Patentansprüche

1. Flüssigkeitsabscheider, insbesondere zum Trennen von Gemischen aus Wasser und spezifisch leichteren Flüssigkeiten wie Öl, Benzin, Fett od. dgl., mit einer Schlammfangvorrichtung, einem Benzinabscheider und einem Koaleszenzabscheider, die von einem zu reinigenden Flüssigkeitsgemisch nacheinander durchströmt sind, wobei der Koaleszenzabscheider innerhalb eines Behälters angeordnet ist, der in einen Behälter der Schlammfangvorrichtung eingesetzt ist, dadurch gekennzeichnet, daß der Benzinabscheider (20) von einer Ringkammer (21) gebildet ist, die den Behälter (35) des Koaleszenzabscheiders (30) umgibt und deren Einlauf (22) und Auslauf (23) nebeneinander angeordnet, jedoch durch eine Trennwand (24) in der Ringkammer (21) voneinander getrennt sind, so daß die zu reinigende Flüssigkeit den Behälter (35) des Koaleszenzabscheiders (30) in der Ringkammer (21) zwischen dem Einlauf (22) und dem Auslauf (23) im wesentlichen vollständig umströmt.

2. Flüssigkeitsabscheider nach Anspruch 1, dadurch gekennzeichnet, daß die Ringkammer (21) zwischen der Außenwand (33) des Behälters (35) des Koaleszenzabscheiders (30) und einer äußeren Kammerwand (25) gebildet ist, die den Behälter (35) des Koaleszenzabscheiders (30) umgibt.

3. Flüssigkeitsabscheider nach Anspruch 1 oder 2, dadurch gekennzeichnet, daß in der Kammerwand (25) ein Einlauf (22) der Ringkammer (21) und in der Außenwand (33) des Behälters (35) des Koaleszenzabscheiders (30) ein Auslauf (23) der Ringkammer (21) ausgebildet ist.

4. Flüssigkeitsabscheider nach einem der Ansprüche 1 bis 3, dadurch gekennzeichnet, daß die Trennwand (24) im wesentlichen senkrecht zur Strömungsrichtung verläuft.

5. Flüssigkeitsabscheider nach einem der Ansprüche 1 bis 4, dadurch gekennzeichnet, daß sich die Ringkammer (21) zwischen dem Einlauf (22) und dem Auslauf (23) über einen Umfangsbereich von etwa 350° erstreckt.

6. Flüssigkeitsabscheider nach einem der Ansprüche 1 bis 5, dadurch gekennzeichnet, daß in der Ringkammer (21) eine den Einlaufbereich (22a) begrenzende, sich im wesentlichen senkrecht zur Strömungsrichtung erstreckende erste Leitwand (27) angeordnet ist, die eine bodennahe Durchtrittsöffnung (27a) aufweist und lediglich eine bodennahe Strömung zuläßt.

7. Flüssigkeitsabscheider nach einem der Ansprüche 1 bis 6, dadurch gekennzeichnet, daß in der Ringkammer (21) stromab des Einlaufbereiches (22a) eine im wesentlichen senkrecht zur Strömungsrichtung verlaufende zweite Leitwand (28) angeordnet ist, die sich vom Boden der Ringkammer (21) bis etwa zu deren halber Höhe erstreckt.

8. Flüssigkeitsabscheider nach einem der Ansprüche 1 bis 7, dadurch gekennzeichnet, daß nahe dem Auslauf (23) der Ringkammer (21) eine den Auslaufbereich (23a) begrenzende, sich im wesentlichen senkrecht zur Strömungsrichtung erstreckende dritte Leitwand (29) angeordnet ist, die eine bodennahe Durchtrittsöffnung (29a) aufweist und lediglich eine bodennahe Strömung zuläßt.

9. Flüssigkeitsabscheider nach einem der Ansprüche 1 bis 8, dadurch gekennzeichnet, daß der Behälter (35) des Koaleszenzabscheiders (30) einen im wesentlichen kreisförmigen Querschnitt aufweist.

10. Flüssigkeitsabscheider nach einem der Ansprüche 1 bis 9, dadurch gekennzeichnet, daß der Behälter (13) der Schlammfangvorrichtung (10) einen im wesentlichen kreisförmigen Querschnitt aufweist.

11. Flüssigkeitsabscheider nach einem der Ansprüche 1 bis 10, dadurch gekennzeichnet, daß die Kammerwand (25) im wesentlichen konzentrisch zu dem Behälter (35) des Koaleszenzabscheiders (30) verläuft.

12. Flüssigkeitsabscheider nach einem der Ansprüche 1 bis 11, gekennzeichnet durch eine Probenentnahmevorrichtung (40) mit einem Probeentnahmestutzen (41), der im Bereich des Auslaufes (34) des Koaleszenzabscheiders (30) abzweigt.

13. Flüssigkeitsabscheider nach einem der Ansprüche 1 bis 12, dadurch gekennzeichnet, daß der Behälter (13) der Schlammfangvorrichtung (10) aus Stahlbeton, Edelstahl, Gußeisen, Polyethylen, Polypropylen, glasfaserverstärktem Kunststoff oder Faserbeton besteht.

14. Flüssigkeitsabscheider nach einem der Ansprüche 1 bis 13, dadurch gekennzeichnet, daß der Behälter (35) des Koaleszenzabscheiders (30) aus Edelstahl, Polyethylen, Polypropylen, glasfaserverstärktem Kunststoff, Faserbeton oder verzinktem Stahl besteht.

## Claims

1. Liquid separator, particularly for separating mixtures of water and specifically lighter liquids such as oil, petrol, grease, etc., with a sludge extractor, a petrol separator and a coalescence separator, through which successively flow a liquid mixture to be cleaned, the coalescence separator being located within a container, which is inserted in a container of the sludge extractor, characterized in that the petrol separator (20) is formed by an annular chamber (21), which surrounds the container (35) of the coalescence separator (30) and whose inlet (22) and outlet (23) are juxtaposed, but are separated from one another by a partition (24) in the annular chamber (21), so that the liquid to be cleaned substantially completely flows round the container (35) of the coalescence separator (30) into the annular chamber (21) between the inlet (22) and the outlet (23).

2. Liquid separator according to claim 1, characterized in that the annular chamber (21) is formed between the outer wall (33) of the container (35) of the coalescence separator (30) and an outer chamber wall (25), which surrounds the container (35) of the coalescence separator (30).

3. Liquid separator according to claim 1 or 2, characterized in that in the chamber wall (25) is formed an inlet (22) of the annular chamber (21) and in the outer wall (33) of the container (35) of the coalescence separator (30) is formed an outlet (23) of the annular chamber (21).

4. Liquid separator according to one of the claims 1 to 3, characterized in that the partition (24) is substantially perpendicular to the flow direction.

5. Liquid separator according to one of the claims 1 to 4, characterized in that between the inlet (22) and the outlet (23) the annular chamber (21) extends over a circumferential area of approximately 350°.

6. Liquid separator according to one of the claims 1 to 5, characterized in that in the annular chamber (21) is located a first baffle (27) adjacent to the inlet area (22a) and extending substantially perpendicular to the flow direction and which is provided with a near ground passage opening (27a) and only allows a near ground flow.

7. Liquid separator according to one of the claims 1 to 6, characterized in that, in the annular chamber (21), downstream of the inlet area (22a), is provided a second baffle (28) running substantially perpendicular to the flow direction and which extends from the bottom of the annular chamber (21) roughly to half its height.

8. Liquid separator according to one of the claims 1 to 7, characterized in that close to the outlet (23) of the annular chamber (21) is provided a third baffle (29) adjacent to the outlet area (23a) and extending substantially perpendicular to the flow direction and which is provided with a near ground passage opening (29a) and only allows a near ground flow.

9. Liquid separator according to one of the claims 1 to 8, characterized in that the container (35) of the coalescence separator (30) has a substantially circular cross-section.

10. Liquid separator according to one of the claims 1 to 9, characterized in that the container (13) of the sludge extractor (10) has a substantially circular cross-section.

11. Liquid separator according to one of the claims 1 to 10, characterized in that the chamber wall (25) is substantially concentric to the container (35) of the coalescence separator (30).

12. Liquid separator according to one of the claims 1 to 11, characterized by a sampling device (40) with a sample removal connection (41), which branches off in the vicinity of the outlet (34) of the coalescence separator (30).

13. Liquid separator according to one of the claims 1 to 12, characterized in that the container (13) of the sludge extractor (10) is made from reinforced concrete, high-grade steel, cast iron, polyethylene, polypropylene, glass fibre-reinforced plastic or continuously reinforced concrete.

14. Liquid separator according to one of the claims 1 to 13, characterized in that the container (35) of the coalescence separator (30) is made from high-grade steel, polyethylene, polypropylene, glass fibre-reinforced plastic, continuously reinforced concrete or galvanized steel.

## Revendications

1. Séparateur de liquides, notamment pour la séparation de mélanges d'eau et de liquides spécifiquement plus légers tels que l'huile, l'essence, la graisse ou analogues, comportant un dispositif de dépôt de boue, un séparateur d'essence et un séparateur à coalescence, traversés l'un après l'autre par un mélange liquide à purifier, le séparateur à coalescence étant monté à l'intérieur d'un compartiment installé dans une enceinte du dispositif de dépôt de boue, caractérisé en ce que le séparateur d'essence (20) consiste en une chambre annulaire (21) entourant le compartiment (35) du séparateur à coalescence (30) et dont l'entrée (22) et la sortie (23) sont disposées côte à côte, mais séparées par une cloison (24) dans la chambre annulaire (21), de sorte que le liquide à purifier coule autour du compartiment (35) du séparateur à coalescence (30) dans la chambre annulaire (21) entre l'entrée (22) et la sortie (23).

2. Séparateur selon la revendication 1, caractérisé en ce que la chambre annulaire (21) est formée entre la paroi extérieure (33) du compartiment (35) du séparateur à coalescence (30) et une paroi extérieure (25) de la chambre entourant le compartiment (35) du séparateur à coalescence (30).

3. Séparateur selon l'une quelconque des revendications 1 ou 2, caractérisé en ce qu'une entrée (22) de la chambre annulaire (21) est ménagée dans la paroi (25) de la chambre et qu'une sortie (23) de la chambre annulaire (21) est ménagée dans la paroi extérieure (33) du compartiment (35).

4. Séparateur selon l'une quelconque des revendications 1 à 3, caractérisé en ce que la cloison (24) est sensiblement perpendiculaire à la direction d'écoulement.

5. Séparateur selon l'une quelconque des revendications 1 à 4, caractérisé en ce que la chambre annulaire (21) s'étend entre l'entrée (22) et la sortie (23) sur une zone angulaire d'environ 350°.

6. Séparateur selon l'une quelconque des revendications 1 à 5, caractérisé en ce qu'une première cloison de guidage (27), délimitant la zone d'entrée (22a) et sensiblement perpendiculaire à la direction d'écoulement, est disposée dans la chambre annulaire (21), cloison de guidage présentant un passage (27a) près du sol et ne laissant passer qu'un seul flux près du sol.

7. Séparateur selon l'une quelconque des revendications 1 à 6, caractérisé en ce qu'une deuxième paroi de guidage (28), sensiblement perpendiculaire à la direction d'écoulement, est disposée dans la chambre annulaire (21) en aval de la zone d'entrée (22a), paroi de guidage s'élevant du fond de la chambre annulaire (21) jusqu'à environ mi-hauteur de la chambre.

8. Séparateur selon l'une quelconque des revendications 1 à 7, caractérisé en ce qu'une troisième paroi de guidage (29), délimitant la zone de sortie (23a) et sensiblement perpendiculaire à la direction d'écoulement, est disposée près de la sortie (23) de la chambre annulaire (21), paroi de guidage présentant un passage (29a) près du sol et ne laissant passer qu'un seul flux près du sol.

9. Séparateur selon l'une quelconque des revendications 1 à 8, caractérisé en ce que le compartiment (35) du séparateur à coalescence (30) présente une section sensiblement circulaire.

10. Séparateur selon l'une quelconque des revendications 1 à 9, caractérisé en ce que l'enceinte (13) du dispositif de dépôt de boue (10) présente une section sensiblement circulaire.

11. Séparateur selon l'une quelconque des revendications 1 à 10, caractérisé en ce que la paroi (25) de la chambre s'étend sensiblement concentrique au compartiment (35) du séparateur à coalescence (30).

12. Séparateur selon l'une quelconque des revendications 1 à 11, caractérisé par un dispositif de prélèvement d'échantillons (40) à tube (41) de prélèvement d'échantillons s'élevant dans la zone de la sortie (34) du séparateur à coalescence.

13. Séparateur selon l'une quelconque des revendications 1 à 12, caractérisé en ce que l'enceinte (13) du dispositif de dépôt de boue (10) est réalisée en béton armé, en acier spécial, en fonte moulée, en polyéthylène, en polypropylène, en matière plastique renforcée de fibres de verre ou en béton de ciment et de fibres.

14. Séparateur selon l'une quelconque des revendications 1 à 13, caractérisé en ce que le compartiment (35) du séparateur à coalescence (30) est réalisé en acier spécial, en polyéthylène, en polypropylène, en matière plastique renforcée de fibres de verre, en béton de ciment et de fibres ou en acier galvanisé.
